## Europäisches Patentamt
## European Patent Office
## Office européen des brevets

(19)

(11) Veröffentlichungsnummer: **0 217 022**
**B1**

(12) **EUROPÄISCHE PATENTSCHRIFT**

(45) Veröffentlichungstag der Patentschrift:
08.03.89

(51) Int. Cl.⁴: **G01N 25/48**

(21) Anmeldenummer: 86109867.1

(22) Anmeldetag: 18.07.86

(54) **Vorrichtung zur Bestimmung und Überwachung von Stoff-Konzentrationen in flüssigen Medien (I).**

(30) Priorität: 21.09.85 DE 8527071 U

(43) Veröffentlichungstag der Anmeldung:
08.04.87 Patentblatt 87/15

(45) Bekanntmachung des Hinweises auf die Patenterteilung:
08.03.89 Patentblatt 89/10

(84) Benannte Vertragsstaaten:
AT BE CH DE FR GB IT LI LU NL SE

(73) Patentinhaber: **Degussa Aktiengesellschaft,
Weissfrauenstrasse 9, D-6000 Frankfurt am Main 1(DE)**

(72) Erfinder: **Kürzinger, Karl, Dr., Lilienstrasse 14,
D-6450 Hanau 8(DE)**
Erfinder: **Wachendörfer, Peter, Manscheiderstrasse 60,
D-6000 Frankfurt 71(DE)**

(56) Entgegenhaltungen:
WO-A-81/01615
DE-A- 2 945 241
DE-C- 3 437 624
DE-U- 8 527 072

JOURNAL OF PHYSICS, E. SCIENTIFIC INSTRUMENTS,
Band 13, Nr. 12, Dezember 1980, Seiten 1292-1296,
Dorking, GB; S. RANDZIO et al.: "A flow calorimeter
with active heat exchangers"

**Beschreibung**

Die Erfindung betrifft eine Vorrichtung zur Bestimmung und Überwachung von Stoffkonzentrationen in flüssigen Medien, die bei Umsetzung mit anderen Stoffen in einer exothermen Reaktion vollständig abreagieren, durch Messung des Temperaturanstiegs bei dieser Umsetzung, bestehend aus einer Meßzelle mit Zulaufleitungen für das Reaktionsmedium und den reagierenden Stoff, Ablaufleitung und Temperaturfühlern. Die Vorrichtung dient insbesondere zur Bestimmung und Überwachung von Wasserstoffperoxid- und Chlorit-Konzentrationen in Waschlösungen bei der Rauchgaswäsche von z.B. Müllverbrennungsanlagen oder Großfeuerungsanlagen.

Bei vielen kontinuierlichen und diskontinuierlichen chemischen Verfahren, die mit Wasserstoffperoxid, Natriumchlorit oder sonstigen Oxidations- oder Reduktionsmitteln arbeiten, ist es notwendig, deren Konzentration fortwährend messend zu überwachen und bei Bedarf zu regulieren. Dies gilt insbesondere auch für moderne Verfahren der Rauchgaswäsche, bei denen Schwefeldioxid mit Hilfe von wasserstoffperoxidhaltigen Lösungen oder Stickoxide mit Hilfe von natriumchlorithaltigen Lösungen aus den Rauchgasen entfernt werden. Daneben werden solche Lösungen z.B. auch bei der Wasserentkeimung in Schwimmbädern eingesetzt.

Wäßrige Natriumchloritlösungen werden neuerdings dazu verwendet, das in den Rauchgasen von Müllverbrennungsanlagen enthaltene Stickstoffmonoxid durch eine Naßwäsche in Stickstoffdioxid überzuführen. In sauren Chloritlösungen entsteht je nach pH-Wert mehr oder weniger freies Chlordioxid, das äußerst explosibel ist. Es ist daher wichtig, in solchen Lösungen den Chloritgehalt fortwährend zu überwachen und zu regeln.

Aus der DE-PS 3 437 624, veröffentlicht am 23.1.86, ist eine Vorrichtung bekannt, mit der sich Wasserstoffperoxidkonzentrationen in flüssigen Reaktionsmedien überwachen und regeln lassen, indem man in einer Meßzelle einen Teilstrom der wasserstoffperoxidhaltigen Lösung mit Schwefeldioxid vollständig umsetzt und den von der Reaktionswärme herrührenden Temperaturanstieg des Gemisches mißt. Der Temperaturanstieg ist ein Maß für die Wärmeentwicklung und damit auch ein Maß für die Wasserstoffperoxidkonzentration in dem Reaktionsmedium. Analog lassen sich mit Schwefeldioxid oder anderen Reduktionsmitteln auch die Konzentrationen anderer Oxidationsmittel, wie z.B. Natriumchlorit, in wäßrigen Lösungen bestimmen. Die Vorrichtung besteht aus einer thermisch isolierten Meßzelle, die an einem Ende getrennt eine Zulaufleitung für einen Teilstrom des oxidierenden Reaktionsmediums und eine Zulaufleitung für den reagierenden Stoff, z.B. Schwefeldioxid, aufweist und am anderen Ende eine Ablaufleitung besitzt. An den Zulaufleitungen und an der Ablaufleitung sind Temperaturfühler zur Messung der Eingangs- und Ausgangstemperatur der Flüssigkeiten angebracht.

Diese Meßzelle muß an eine Teilstromleitung des Reaktionsmediums angeschlossen sein und erfordert dadurch zusätzlich Leitungen, Dosiereinrichtungen, Ventile und/oder Pumpen. Erstrebenswert ist daher der direkte Anschluß an die Förderleitung des Reaktionsmediums, die z.B. die Waschflüssigkeit aus dem Sumpf zum Wäscherkopf einer Absorptionskolonne fördert.

Es war daher Aufgabe der vorliegenden Erfindung, eine Vorrichtung zur Bestimmung und Überwachung von Stoffkonzentrationen in flüssigen Medien, die bei Umsetzung mit anderen Stoffen in einer exothermen Reaktion vollständig abreagieren, durch Messung des Temperaturanstiegs bei dieser Umsetzung zu entwickeln, bestehend aus einer Meßzelle mit Zulaufleitungen für das Reaktionsmedium und den reagierenden Stoff, Ablaufleitung und Temperaturfühlern, die ohne zusätzliche Leitungen und Förderelemente betrieben werden kann. Außerdem sollte auf die thermische Isolation der Meßzelle verzichtet werden können.

Diese Aufgabe wurde erfindungsgemäß dadurch gelöst, daß ein Rohrabschnitt mit etwa dem gleichen Durchmesser wie die das Reaktionsmedium transportierende Förderleitung beidseitig mit Befestigungselementen zum Einbau in die Förderleitung versehen ist und daß in diesem Rohrabschnitt axial ein beiderseits offener Rohrabschnitt geringeren Durchmessers angeordnet ist, in dessen einem offenen Ende die Zuführungsleitung für den reagierenden Stoff hineinragt, und an dessen anderem Endbereich ein Thermofühler zur Messung der Temperaturerhöhung des Gemisches angebracht ist.

Vorzugsweise ist der Durchmesser des inneren Rohrabschnitts höchstens halb so groß wie der Durchmesser des äußeren Rohrabschnitts. Dadurch ist sichergestellt, daß nur ein kleiner Teilstrom des Reaktionsmediums durch den inneren Rohrabschnitt fließt, der als Meßzelle dient.

Die erfindungsgemäße Vorrichtung läßt sich problemlos in eine das Reaktionsmedium transportierende Förderleitung einbauen. Sie benötigt keine zusätzlichen Leitungen, Ventile oder Pumpen, um einen für die Messung notwendigen Teilstrom des Reaktionsmediums zu erzeugen.

Die Befestigungselemente können beispielsweise als Flansch oder als Verschraubung ausgeführt sein. Auf eine thermische Isolierung kann verzichtet werden, da der innere Rohrabschnitt als eigentliche Meßzelle durch das im Ringspalt zwischen dem inneren und dem äußeren Rohrabschnitt fließende Reaktionsmedium ausreichend gegen äußere Temperatureinflüsse geschützt ist.

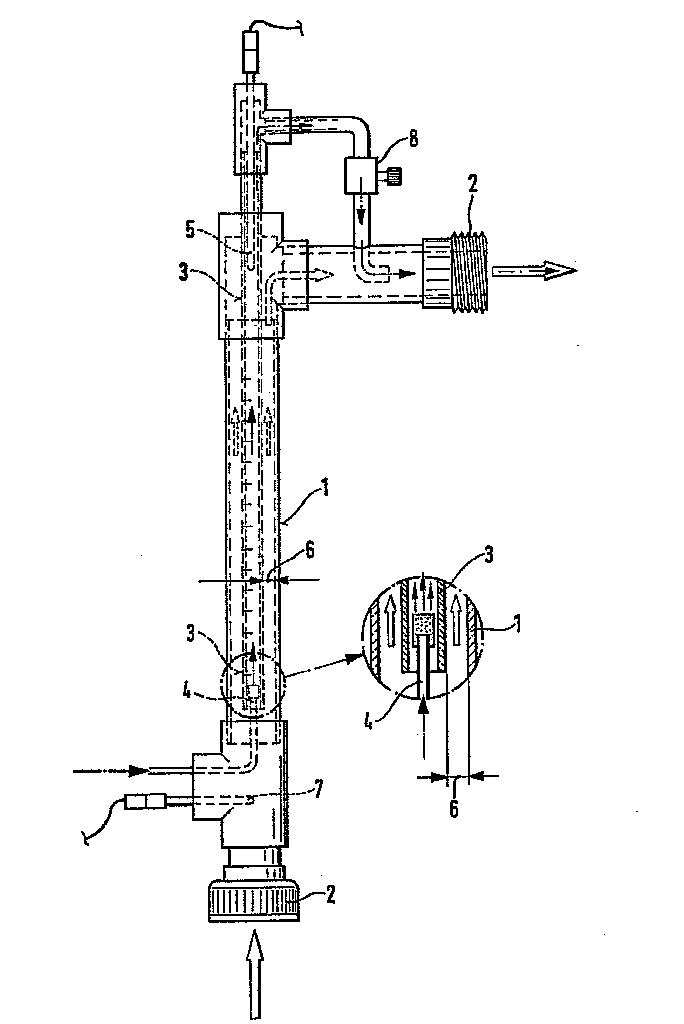

Die Abbildung zeigt schematisch eine beispielhafte Ausführungsform der erfindungsgemäßen Vorrichtung. Diese besteht aus einem Rohrabschnitt (1), dessen Durchmesser in etwa dem der Förderleitung entspricht, in die sie mit Hilfe der Befestigungselemente (2) an den beiden Rohrabschnittsenden eingebaut wird. In diesem Rohrabschnitt (1) ist axial ein beiderseits offener Rohrabschnitt (3) geringeren Durchmessers angeordnet, der entweder ganz in dem äußeren Rohrabschnitt (1) liegt oder auch zum Teil aus diesem herausragt. Entscheidend ist, daß die eigentliche Meßzelle, die sich zwischen der Zuführungsleitung (4) für den reagierenden Stoff die in das offene Ende des inneren Rohrabschnitts (3) hineinragt, und dem Thermofühler (5) ausbildet, der in Fließrichtung des Reaktionsmediums im anderen Endbereich des inneren Rohrabschnitts (3) sich befindet, von dem äußeren Rohrabschnitt (1) und damit von dem Reaktionsmedium im Ringspalt (6) umgeben ist. Die Temperatur des ankommenden Reaktionsmediums wird durch einen Thermofühler (7) vor Eintritt des Reaktionsmediums in den inneren Rohrabschnitt (3) gemessen, die Temperaturerhöhung durch die ablaufende exotherme Reaktion, die ein Maß für die Konzentration des zu bestimmenden Stoffes ist, beispielsweise Natriumchlorit oder Wasserstoffperoxid, mittels des Thermofühlers (5) im inneren Rohrabschnitt (3). Die Menge des Teilstroms, die durch den inneren Rohrabschnitt (3) fließt, kann zusätzlich über ein Ventil (8) geregelt werden. Als reagierender Stoff, der über die Zuführungsleitung (4) dem inneren Rohrabschnitt (3) zugeführt wird, verwendet man vorzugsweise gasförmiges Schwefeldioxid.

**Patentansprüche**

1. Vorrichtung zur Bestimmung und Überwachung von Stoff-Konzentrationen in flüssigen Medien, die bei Umsetzung mit anderen Stoffen in einer exothermen Reaktion vollständig abreagieren, durch Messung des Temperaturanstiegs bei dieser Umsetzung, bestehend aus einer Meßzelle mit Zulaufleitungen für das Reaktionsmedium und den reagierenden Stoff, Ablaufleitung und Temperaturfühlern, dadurch gekennzeichnet, daß ein Rohrabschnitt (1) mit etwa dem gleichen Durchmesser wie die das Reaktionsmedium transportierende Förderleitung beidseitig mit Befestigungselementen (2) zum Einbau in die Förderleitung versehen ist und daß in diesem Rohrabschnitt (1) axial ein beiderseits offener Rohrabschnitt (3) geringeren Durchmessers angeordnet ist, in dessen einem offenen Ende die Zuführungsleitung (4) für den reagierenden Stoff hineinragt und an dessen anderem Endbereich ein Thermofühler (5) zur Messung der Temperaturerhöhung des Gemisches angebracht ist.

2. Vorrichtung nach Anspruch 1, dadurch gekennzeichnet, daß der Durchmesser des inneren Rohrabschnitts (3) höchstens halb so groß ist wie der Durchmesser des äußeren Rohrabschnitts (1).

**Claims**

1. An apparatus for determining and monitoring concentrations of substances in liquid media which, on reaction with other substances, react off completely in an exothermic reaction by measurement of the increase in temperature during that reaction, consisting of a measuring cell with feed lines for the reaction medium and the reacting substance, a discharge line and temparature sensors, characterized in that a pipe section (1) having substantially the same diameter as the feed pipe transporting the reaction medium is provided on both sides with fastening elements (2) for installation in the feed pipe and in that arranged axially in this pipe section (1) is a pipe section (3) of smaller diameter which is open at both ends and into one open end of which projects the feed line (4) for the reacting substance, a heat sensor (5) being arranged at its other end for measuring the increase in temperature of the mixture.

2. An apparatus as claimed in claim 1, characterized in that the diameter of the inner pipe section (3) is at most half that of the outer pipe section (1).

**Revendications**

1. Dispositif pour la détermination et le contrôle de la concentration en substances dans les milieux liquides, qui par condensation avec d'autres substances réagit complètement en une réaction exothermique, détermination par mesure de la montée de la température au cours de cette condensation, qui consiste en une cellule de mesure avec des conduites d'alimentation pour le milieu réactionnel et la substance qui réagit, une conduite de rejet et des palpeurs de température, caractérisé en ce qu'une portion de tube ayant à peu près le même diamètre que celui de la conduite de transfert transportant le milieu réactionnel, est munie des deux côtés d'éléments de serrage (2) pour le montage dans la conduite de transport et que dans ce segment de tube (1), un segment de tube (3) de diamètre plus réduit, ouvert des deux côtés est disposé axialement, dans lequel la conduite d'alimentation (4) pour la substance qui réagit se dresse vers l'intérieur à son extrémité ouverte et à l'autre zone terminale duquel un palpeur thermique (5) pour la mesure de l'augmentation de température du mélange, est appliqué.

2. Dispositif selon la revendication 1, caractérisé en ce que le diamètre du segment de tube (3) interne est au plus moitié aussi grand que le diamètre du segment de tube (1) externe.

EP 0 217 022 B1